Europäisches Patentamt

European Patent Office

Office européen des brevets

(19)

(11) Veröffentlichungsnummer : **0 022 766**
**B1**

(12) **EUROPÄISCHE PATENTSCHRIFT**

(45) Veröffentlichungstag der Patentschrift :
**11.05.83**

(21) Anmeldenummer : **79900130.0**

(22) Anmeldetag : **27.01.79**

(86) Internationale Anmeldenummer :
**PCT/DE 79/00012**

(87) Internationale Veröffentlichungsnummer :
**WO WO/80016 (07.08.80 Gazettee 80/18)**

(51) Int. Cl.³ : **H 01 B 17/32**, H 01 B 19/00

(54) **HOCHSPANNUNGSVERBUNDISOLATOR.**

(43) Veröffentlichungstag der Anmeldung :
**28.01.81 Patentblatt 81/04**

(45) Bekanntmachung des Hinweises auf die Patenterteilung : **11.05.83 Patentblatt 83/19**

(84) Benannte Vertragsstaaten :
**FR**

(56) Entgegenhaltungen :
**BE A 768 236**
**DE A 2 511 809**
**DE A 2 520 281**
**DE A 2 746 870**
**FR A 1 040 850**
**FR A 2 148 152**
**GB A 766 230**
**GB A 1 224 626**
**GB A 1 292 276**
**US A 3 576 938**
**US A 3 898 372**

(73) Patentinhaber : **BROWN, BOVERI & CIE Aktiengesellschaft Mannheim**
**Kallstadter Strasse 1**
**D-6800 Mannheim Käfertal (DE)**

(72) Erfinder : **HERZIG, Karlheinz**
**Melibokusring 5**
**D-6806 Viernheim (DE)**

(74) Vertreter : **Kempe, Wolfgang, Dr. et al**
**c/o Brown, Boveri & Cie AG Postfach 351**
**D-6800 Mannheim 1 (DE)**

Hochspannungsverbundisolator

Die Erfindung bezieht sich auf einen Hochspannungsverbundisolator mit einem glasfaserverstärkten Kunststoffstab als Kern, auf den mehrere mit einer dem Kerndurchmesser angepaßten Bohrung versehene Schirmkörper aufgeschoben sind.

Anwendungsgebiet der Erfindung :

Solche Hochspannungsverbundisolatoren kommen im Freileitungsbau in verschiedenen Ausführungsformen zur Halterung von Leiterseilen zur Anwendung.

Charakteristik der bekannten technischen Lösungen :

Aus Kunststoffen hergestellte Hochspannungsverbundisolatoren sind heute in vielfältigen Bauformen bekannt.

Durch die DE-A1-27 46 870 ist ein Verfahren zur Herstellung von Freiluft-Verbundisolatoren bekanntgeworden. Auf einen vorgefertigten Glasfiberstab, dessen Oberfläche einer speziellen Behandlung unterzogen wird, werden schließlich zuvor radial aufgeweitete Schirme auf den Glasfiberstab aufgeschoben und mit diesem vulkanisiert. Das Aufbringen der Schirme erweist sich als relativ aufwendig.

In der GB-A-12 92 276 wird ein Verbundisolator beschrieben, dessen Isolatorkappen unter Ausnutzung der Energieelastizität eines thermoplastischen Isoliermaterials aufgeschrumpft werden. Das thermoplastische Isoliermaterial muß zuerst vorbehandelt werden, indem es in kaltem oder warmen Zustand auf einen größeren Innendurchmesser der Isolatorkappen gedehnt wird, der von dem Isoliermaterial beibehalten wird. Das Aufschrumpfen der Isolatorkappen geschieht so, daß nach dem Aufsetzen der Isolatorkappen auf den Isolatorstab diese erwärmt werden, so daß während des Erwärmungsvorgangs der Prozeß des Aufschrumpfens abläuft, auf Grund des Energieelastizitätseffekts. Das Aufschrumpfen erweist sich als relativ aufwendig. Desweiteren läßt sich die Isolatorkappe zwar mit Hilfe von Wärme von dem Isolatorstab wieder lösen, ein zweites Aufschrumpfen ist aber nicht mehr möglich.

Der US-A-38 98 372 ist ein Verbundisolator zu entnehmen, dessen aus einem gummielastischen Material hergestellte Schirmkörper unter Ringvorspannung auf einen Glasfaserstab aufgeschoben werden, wobei der gummielastische Effekt des Materials zur Erzeugung der Ringvorspannung genutzt wird. Mit Hilfe in axialer Richtung wirkender Druckkräfte, welche durch die an den Enden des Glasfaserstabes angeordneten Armaturen aufgebracht werden, werden die Schirmkörper zur Erreichung eines festen Sitzes noch gegeneinandergepreßt. Durch die Verwendung gummielastischer Schirmkörper müssen zur Sicherung derselben zusätzliche Druckkräfte in axialer Richtung aufgebracht werden.

Aus der DE-A-22 18 342 ist ein elektrischer Isolator bekannt, der einen Kern aus einem glasfaserverstärkten Kunststoffstab aufweist. Dieser Stab ist mit einer Außenschicht versehen, in welche ein Gewinde eingeschnitten ist. Auf dieses Außengewinde sind die mit einem Innengewinde versehenen Schirmkörper aufgeschraubt. Die auf den Kern aufgebrachte Außenschicht ist aus dem gleichen Kunststoff wie der Kern gefertigt. Das Gewinde ist in diese Außenschicht eingeschnitten. Die Dicke der Außenschicht ist so gewählt, daß sie größer ist als die Gewindetiefe.

Für die Fertigung dieser Isolatoren sind sehr viele Arbeitsgänge erforderlich ; hinzu kommt noch ein sehr großer Zeitaufwand für das Aufschrauben der Schirmkörper auf den Gewindestab. Diese gesamten Faktoren bewirken, daß eine wirtschaftliche Herstellung eines solchen Isolators nicht möglich ist.

Ziel der Erfindung :

Der Erfindung liegt die Aufgabe zugrunde, mit einfachen Mitteln die Verbindung der Schirmkörper mit dem Kunststoffstab zu verbessern.

Darlegung des Wesens der Erfindung :

Die Lösung der Aufgabe ist dadurch gekennzeichnet, daß die Bohrungen der Schirmkörper vor dem Aufschrumpfen auf den Kunststoffstab durch Erhitzen aufgeweitet sind.

Auf den glasfaserverstärkten Kunststoffstab werden nur Schichten aus Silikonkautschuk, gegebenenfalls unter Zuhilfenahme eines Haftvermittlers, und ein synthetisches, platisches Fett aufgetragen, außerdem werden die Schirmkörper nur auf den Kunststoffstab aufgeschrumpft. Damit wird eine schnelle Herstellung des Hochspannungsverbundisolators gewährleistet.

Zudem wird durch das Aufschrumpfen der Schirmkörper auf den glasfaserverstärkten Kunststoffstab eine kraftschlüssige Verbindung zwischen beiden Elementen erreicht, wie sie in ähnlicher Weise bei der formschlüssigen Verbindung zwischen dem mit einem Außengewinde versehenen glasfaserverstärkten Kunststoffstab und den aufgeschraubten Schirmkörpern erreicht wird. Die Ausbildung eines Luftspaltes zwischen zwei benachbarten Schirmkörpern wird durch das rutschfeste Aufschrumpfen eines jeden Schirmkörpers auf den Kunststoffstab auch bei der Einwirkung von Zugkräften auf den Hochspannungsverbundisolator unterbunden. Die enge Verbindung zwischen einem Schirmkörper und seinen beiden angrenzenden Nachbar-Schirmkörpern bleibt in jedem Fall erhalten.

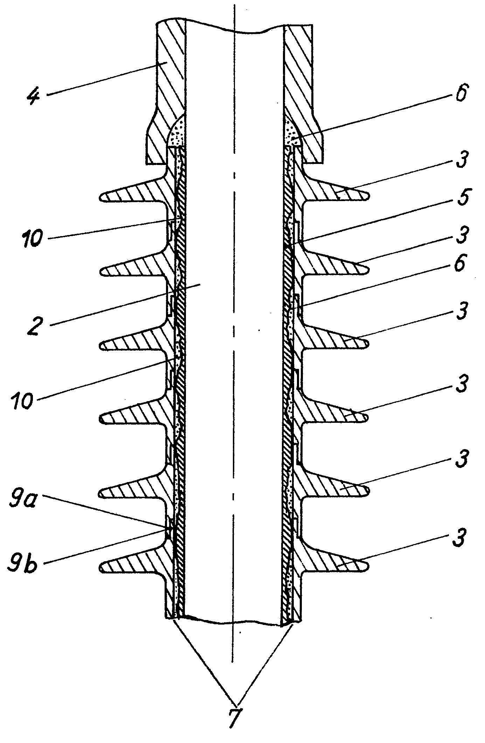

Die Erfindung wird nachstehend anhand der Zeichnungen erläutert. Die einzige Fig. zeigt einen Hochspannungsverbundisolator mit aufgeschrumpften Schirmkörpern im Längsschnitt.

Die Fig. zeigt den erfindungsgemäßen Hochspannungsverbundisolator. Er ist im wesentlichen aus einem glasfaserverstärkten Kunststoffstab 2, Schirmkörpern 3 und einer Anschlußarmatur 4 aufgebaut. Die zylindrischen Außenflächen des glasfaserverstärkten Kunststoffstabes 2 sind außen beschichtet. Bei der mit 5 bezeichneten Schicht handelt es sich um Silikonkautschuk oder ein ähnliches kautschukartiges synthetisches Material. Die Schicht 6 wird durch ein Silikonfett gebildet.

Auf die Außenbeschichtung des gasfaserverstärkten Kunststoffstabes 2 sind Schirmkörper 3 aus Polytetrafluoräthylen oder einem anderen geeigneten Kunststoffmaterial geschoben. Diese Schirmkörper 3 weisen in ihrer Längsachse zylindrisch glatte Bohrungen 7 auf. Der Durchmesser dieser Bohrungen 7 ist geringfügig kleiner als der Durchmesser des beschichteten glasfaserverstärkten Kunststoffstabes 2.

Damit kein Wasser oder Schmutz zwischen den Schirmkörpern 3 hindurch zum glasfaserverstärkten Kunststoffstab 2 vordringen kann, sind je zwei benachbarte, aneinander anschließende Schirmkörper 3 über Nut und Feder 9a und 9b verbunden. Hierfür werden die Schirmkörper 3 schon bei ihrer Herstellung an einem Ende mit einer Feder 9b und am anderen Ende mit einer Nut 9a versehen.

An einem oder beiden Enden wird der glasfaserverstärkte Kunststoffstab 2 mit einer Anschlußarmatur 4 versehen. Diese Anschlußarmatur 4 ist so ausgebildet, daß sie das Ende des ersten angrenzenden Schirmkörpers 3 hüllenartig umgibt. Dadurch wird vermieden, daß Wasser oder Schmutz zwischen den Grenzflächen von Anschlußarmatur und Schirmkörper hindurchtreten kann.

Nachfolgend wird die Herstellung des erfindungsgemäßen Hochspannungsverbundisolators näher erläutert :

Bei der Herstellung des Hochspannungsverbundisolators werden — zunächst mindestens die zylindrischen Außenflächen des glasfaserverstärkten Kunststoffstabes 2 unter Verwendung eines Haftvermittlers mit einer ungleichmäßig dicken Schicht 5 aus Silikonkautschuk oder einem kautschukartigen synthetischen Material beschichtet. Dabei entstehen auf der Oberfläche des beschichteten glasfaserverstärkten Kunststoffstabes 2 flächige Stellen, die einen definierten Außendurchmesser haben und daneben Vertiefungen 10 mit geringer Ausdehnung und Abmessung. Während eines zweiten Arbeitsganges, der sich an den ersten sofort anschließen kann, wird auf die Schicht 5 aus Silikonkautschuk eine zweite Schicht 6 aus platischem, synthetischem Fett aufgetragen. Mit der Schicht 6 sollen die in der Oberfläche der Silikonkautschukschicht 5 verbliebenen Vertiefungen 10 ausgefüllt werden. Die gesamte Beschichtung des Isolators kann sehr dünn sein und unter bestimmten Bedingungen nur aus einer synthetischen Fettschicht bestehen.

Im Anschluß an die Beschichtung des Kunststoffstabes 2 werden die Schirmkörper 3 auf den so behandelten Kunststoffstab 2 aufgeschrumpft.

Zu diesem Zweck werden die Schirmkörper 3 erhitzt. Bei diesem Erhitzungsvorgang dehnen sich die aus Polytetrafluoräthylen gefertigten Schirmkörper 3 geringfügig aus. Beim Erhitzen wird die Temperatur so gewählt, daß sich der Schirmkörper nicht nur an seiner Oberfläche, sondern auch in seinem Inneren ausdehnt. Die hierfür zu wählende Temperatur ist von dem für die Herstellung des Schirmkörpers verwendeten Material abhängig. Bei Schirmkörpern, die aus Polytetrafluoräthylen gefertigt sind, ist hierfür ein Temperaturunterschied von ca. 100 °K oder mehr erforderlich. Da, wie bereits oben erwähnt, die Schirmkörper 3 mit koaxialen Bohrungen versehen sind, deren Durchmesser geringfügig kleiner gewählt sind als der Durchmesser des glasfaserverstärkten Kunststoffstabes 2, erfolgt durch die Erhitzung der Schirmkörper eine Aufweitung der Bohrung. Die Schirmkörperbohrungen werden so erweitert, daß sie geringfügig größer sind als der Außendurchmesser des glasfaserverstärkten Kunststoffstabes 2. Damit können die Schirmkörper 3 leicht über den beschichteten glasfaserverstärkten Kunststoffstab geschoben werden. Dies geschieht solange die Schirmkörper noch heiß sind.

Die Schirmkörper 3 werden auf dem glasfaserverstärkten Kunststoffstab 2 gleich so angeordnet, daß sie von Anfang an über Nut und Feder 9a, 9b fest miteinander verbunden sind. Beim Abkühlen der auf dem glasfaserverstärkten Kunststoffstab 2 angeordneten Schirmkörper 3 ziehen sich diese wieder zusammen, wobei das Schirmkörpermaterial versucht, wieder seine ursprüngliche Ausdehnung zu erreichen. Da jedoch, wie bereits oben erwähnt, die Durchmesser der Schirmkörperbohrungen geringfügig kleiner gewählt sind als der Außendurchmesser des glasfaserverstärkten Kunststoffstabes, wird dieser jetzt von den Schirmkörpern rutschfest umklammert. Dadurch wird ein fester Sitz der Schirmkörper 3 auf dem glasfaserverstärkten Kunststoffstab erreicht mit einer Ringvorspannung, die die zulässige Dauerbeanspruchung des Polytetrafluoäthylen oder des verwendeten Materials nicht überschreitet. Da sich die Schirmkörper 3 allmählich abkühlen, kann das überschüssige Fett zwischen den Fugen jeweils benachbarter Schirmkörper austreten. Gleichzeitig werden durch die schrumpfenden Schirmkörper noch bestehende Lufteinschlüsse zwischen ihnen und dem Kunststoffstab 2 beseitigt. Die Ringvorspannung ist so groß, daß die Schicht 5 verformt wird und hier durch Gegendruck die Innenfläche der als Mantelkörper dienenden Schirmkörper 3 erzeugt. Damit wird die Haftreibung zwischen den Schirmkörpern 3 und dem beschichteten glasfaserverstärkten Kunststoffstab erhöht und ein sicherer fester Sitz der Schirmkörper auf dem Kunststoffstab 2 gesichert.

**Anspruch**

Hochspannungsverbundisolator mit einem glasfaserverstärkten Kunststoffstab (2) als Kern, auf den mehrere mit einer dem Kerndurchmesser angepaßten Bohrung (7) versehene Schirmkörper (3) aufgeschoben sind, dadurch gekennzeichnet, daß die Bohrungen (7) der Schirmkörper (3) vor einem Aufschrumpfen auf den Kunststoffstab (2) durch Erhitzen aufgeweitet sind.

## Claim

A composite high voltage insulator with a glass fibre reinforced plastic rod (2) as its core, on which several protection members (3) are slidden provided with a bore (7) adapted to the core diameter, characterised in that the bores (7) of the protection members (3) are widened by heating before shrinking on the plastic rod (2).

## Revendication

Isolateur composite pour haute tension ayant une tige, en matière plastique (2) renforcée par des fibres de verre, en tant que noyau, sur laquelle plusieurs corps de protection (3) comportant un alésage (7) adapté au diamètre du noyau sont enfilés, caractérisé en ce que les alésages (7) des corps de protection (3) sont élargis par chauffage avant emmanchement sur la tige en plastique (2).

0 022 766